# EUROPEAN PATENT SPECIFICATION

(11) **EP 0 639 449 B1**
(45) Date of publication and mention of the grant of the patent: **16.07.1997**
(21) Application number: 93306504.7
(22) Date of filing: 18.08.1993
(51) Int. Cl.: B30B 9/16, A23N 1/00, B30B 9/26

(54) **Juice extractor**
Saftpresse
Appareil pour extraire des jus

(43) Date of publication of application: 22.02.1995
(73) Proprietor: Kim, Jong Gill, Sucho-ku, Seoul (KR)
(72) Inventor: Kim, Jong Gill, Sucho-ku, Seoul (KR)
(74) Representative: Jennings, Nigel Robin

(56) References cited:
- DE-A- 4 204 133
- DE-C- 923 880
- FR-A- 963 874
- GB-A- 1 171 286
- US-A- 1 722 814

## Description

The present invention relates to a juice extractor for extracting juice from fruit or vegetable material of the type referred to in the precharacterising portion of Claim 1.

U.S.-A-5156872 discloses a juice extractor of the type referred to above which includes a pair of rollers constituting helical gears, that is to say gears with a plurality of teeth or splines which are inclined to the axis of the gear, in engagement with each other. Each roller includes a screw or threaded portion at its leading or front end. The two rollers are disposed within a filter or sieve. This patent teaches that the juice containing material, i.e. fruit or vegetable material, is squashed or compressed by the pair of engaging helical gears and compressed again by the screws and juice is expelled from the juice containing material. This juice passes through and is filtered by the sieve.

However, since the helical gears engage each other, noise is generated and metallic powder is generated by abrasion of the metal constituting the helical gears during their rotation and discharged with the juice. As a result, there is a risk that metallic powder may be ingested when the user drinks the juice. The sieve is constructed of metal plate in which a plurality of minute holes is formed to enable the juice to be separated from the dregs, i.e. the solid vegetable or fruit material being compressed.

However, this sieve has the disadvantage that the minute holes tend to become clogged by the dregs. The extractor and in particular the filter therefore require thorough washing with water and a brush, after use. The juice extractor disclosed in the U.S. Patent includes a discharge disc mounted at the dregs discharge outlet. This disc includes a resilient movable portion which acts as a valve member which moves when the pressure of the dregs or solid material is sufficient to permit the dregs to be discharged. This disc is in practice found not to operate satisfactorily because the discharge pressure of the dregs needs appropriate adjustment in accordance with the different water content of different juice containing materials and also because the resilience of the movable portion of the disc changes with time whereby the characteristics, particularly the extractive efficiency, of the extractor vary with time also.

FR-A-963874 discloses an olive press including a housing whose interior communicates with a supply hopper and contains two rotatable squeezing rollers which include cooperating helical gears, cooperating screws and respective plain cylindrical portions. A filter surrounds the two cylindrical portions. At the downstream end of the rollers there is an outlet for olive pulp which is controlled by a threaded peg or by a valve acted on by an adjustable spring.

GB-A-1171286 discloses an extrusion filter for extracting oil from palm fruits comprising a strainer housing containing two spaced parallel threaded worm spindles which are threaded at their upstream end. At the downstream end of the perforated strainer housing there is a solid discharge outlet. Pressure cones situated in the outlet may be moved axially to vary the liquid content of the discharged solid material. The threads on the spindles may have a decreasing pitch in the axial direction.

It is the object of the present invention to overcome the problems of the prior art. More specifically, the objects of the invention include enabling the juice extraction efficiency to be maximised at differing water contents of the material from which juice is to be extracted; preventing the generation of noise and metallic powder as a result of physical engagement of the squeezing rollers; increasing the compression to which the juice containing material is subjected to further increase the extractive efficiency of the juice extractor; and constructing the filter or sieve so that it may easily be washed and retained solid material may very readily be removed.

According to the present invention a juice extractor of the type referred to above is characterised in that in a portion of each helical gear remote from the screw there is a recess in each flank of each gear tooth extending along the length of the gear tooth. The recess in each flank of each gear tooth provides additional spaces for the accommodation of vegetable or fruit material and thus facilitates the transport of the material from the upstream to the downstream ends of the helical gears.

In a preferred embodiment there is a discharge pressure adjusting device arranged to vary the force with which the valve member is urged towards the closed position. Thus in the juice extractor of the preferred embodiment the discharge opening is not formed in a disc of resilient material of which a portion is movable under the pressure exerted on it by the dregs to permit the dregs to be discharged but instead there are specific means for applying a force to the valve member and a discharge pressure adjusting device for varying this force. This means firstly that the force exerted on the retained dregs within the juice extractor can be varied in accordance with the moisture content of the fruit or vegetable material in question and further that the characteristics of the juice extractor, namely the discharge pressure necessary to open the discharge valve, will not vary with time or that if they do vary such variation can be simply compensated for.

In a preferred embodiment the discharge pressure adjusting device includes a spring of which one end acts on the valve member and the other end acts on an adjusting member which is screw threadedly connected to the leading end of the housing and may be moved towards and away from the housing by rotating it so as to adjust the pressure applied by the spring onto the valve member.

It is preferred that the pitch of the thread of the screw at the leading end of each squeezing roller progressively decreases in the leading direction. This means that the compressive force applied to the dregs retained within the screw thread progressively increases whereby the extractive efficiency of the juice extractor is increased also.

In a preferred embodiment one of the helical gears includes two spaced annular portions, which effectively constitute annular gears, of synthetic resin material which engage the other helical gear, the remainder of the first helical gear being spaced from the corresponding portion of the other helical gear by a predetermined distance, e.g. 0.3 to 0.5 mm. This means that whilst the two helical gears cooperate to crush the material from which juice is to be extracted, they only actually contact one another at the annular portions of synthetic or plastics material. This results in a reduction in the noise generated and, more importantly, eliminates the risk that metallic particles will be produced by abrasion of the helical gears.

It is preferred that the filter, which is of annular construction so that it may surround the two squeezing rollers, comprises a plurality of interconnected, elongate, resilient filter elements, in one side of each of which a plurality of grooves or recesses is formed, each filter element being bent in the middle, the bends in adjacent filter elements being in opposite senses. Thus the filtering apertures are not formed in solid plate or sheet material, as is conventional, but are formed in the side surfaces of interconnected elongate resilient elements. In normal operation, the resilient elements are retained together to form a continuous annular enclosure through the wall of which the grooves or recesses extend. However, when it is desired to wash the filter to remove retained solid material, the filter retainer is removed and the filter elements then move apart under their own resilience to expose the retained solid material on their side surfaces which can then be easily washed away with water.

It will be appreciated that the preferred features referred to above will be of value even without the characterising feature of Claim 1.

Further features and details of the present invention will be apparent from the following detailed description of one specific embodiment which is given with reference to the accompanying drawings, in which:

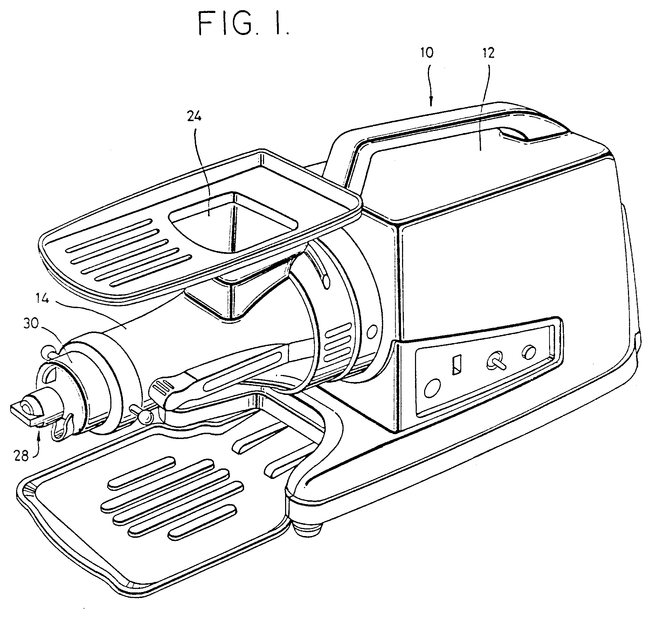

Figure 1 is a perspective view of a juice extractor according to the present invention;
Figure 2 is a perspective view of the squeezing rollers of the juice extractor of Figure 1;
Figure 3 is a top view of the squeezing rollers of Figure 2;

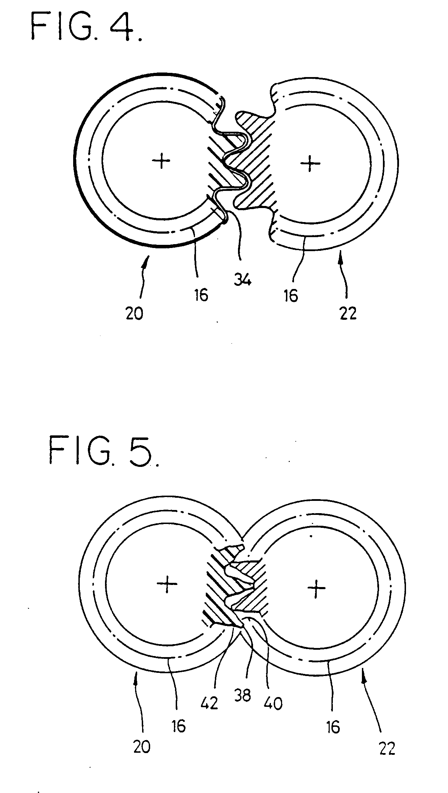

Figure 4 is a sectional view on the line IV-IV in Figure 3;
Figure 5 is a sectional view on the line V-V in Figure 3;

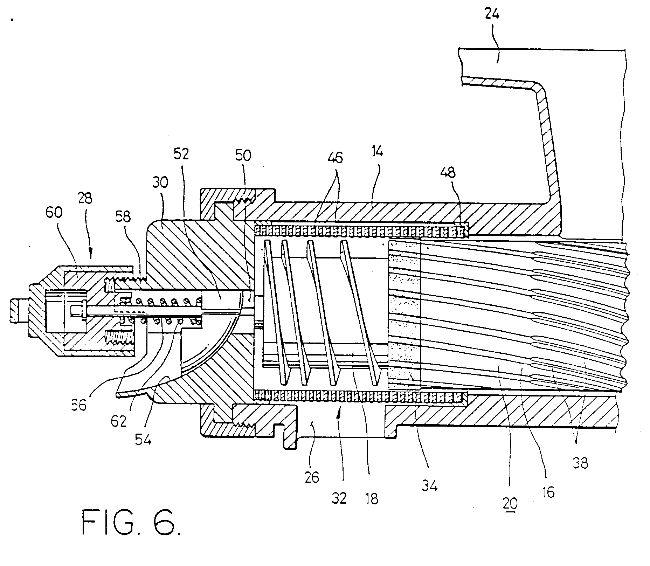

Figure 6 is a scrap sectional view of the juice discharge end section of the juice extractor according to the present invention;
Figure 7 is an elevational view of the filtering element;
Figure 8 is a side view showing the developed state of the filter element; and
Figure 9 is a side view showing the compressed state of the filtering element.

The juice extractor 10 comprises a main body 12 and a housing 14. Within the main body 12 is an electric motor (not shown) and within the housing 14 connected to the front of the main body 12 there is a pair of cooperating squeezing rollers 20, 22 comprising a helical gear 16 and a screw 18 at the leading end. The housing 14 has an upper supply hopper 24 for raw juice containing material, i.e. fruit or vegetable material, and formed in the lower surface of the leading end of the housing 24 is a juice discharge outlet 26. Also provided at the leading end is a discharge section 30 with a pressure adjusting device 28 for the discharge of the dregs or remaining solid matter after juice has been extracted from it. Positioned within the leading end of the housing 4 around the leading end portions of the squeezing rollers 20, 21 is an annular filter 32.

A portion of the helical gear 16 on the squeezing roller 20 is constituted by two annular gears 34, 36 which are made of synthetic resin material and are positioned at respective ends of the gear 16. The portions of the projecting teeth on the gears 34, 36 extend slightly further from the axis of the roller 20 than the portions of the teeth on the remainder of the roller 20. The result of this is that when the pair of squeezing rollers 20, 22 are in engagement with each other, only the gears 34, 36 engage the squeezing roller 22 and a certain space of about, for example, 0.3 - 0.5 mm is maintained between the remainder of the gear 16 on the roller 20 and the corresponding portion of the roller 22. Accordingly, as the helical gears 16 of the squeezing rollers 20, 22 are not in contact with each other except at the ring gears 34, 36, noise is not produced and metallic powder is not generated, in operation.

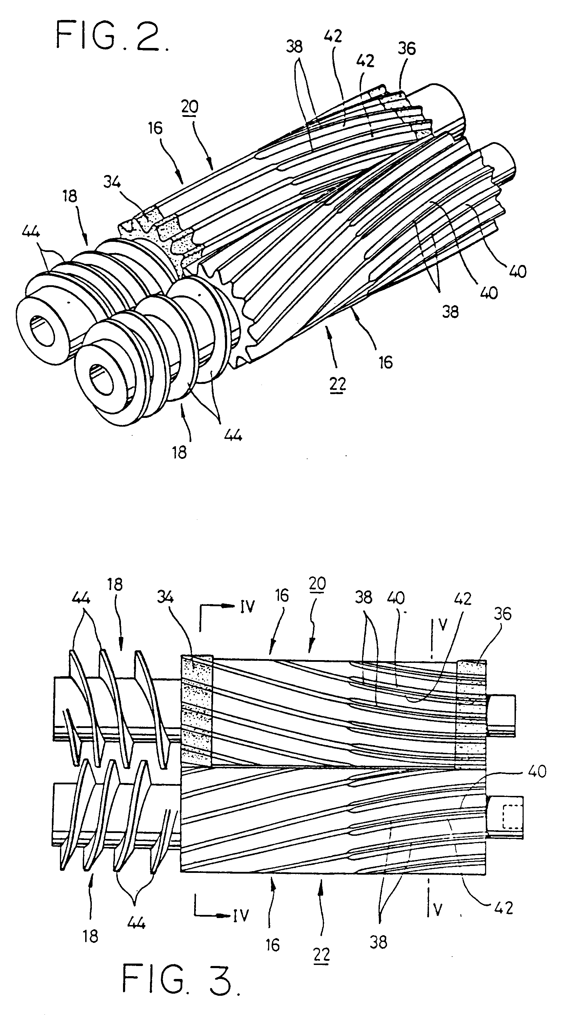

Furthermore, as seen in Figures 2 and 3, shallow grooves or recesses 40 and 42 are formed in the opposite flanks of the teeth of the gears 16 over a portion 38 at the rear end of each gear 16 so as to provide an increased space to facilitate the smooth supply of the vegetable or fruit material to be squeezed.

As mentioned above, a screw 18 is provided at the leading or front end of each helical gear 16, the pitch of the thread 44 of which decreases in the forward direction towards the leading end of the squeezing rollers 20, 22. Thus vegetable or fruit material discharged forwardly by the gears 16 is progressively compressed by the threaded portions thereby increasing the extractive efficiency of the juice extractor.

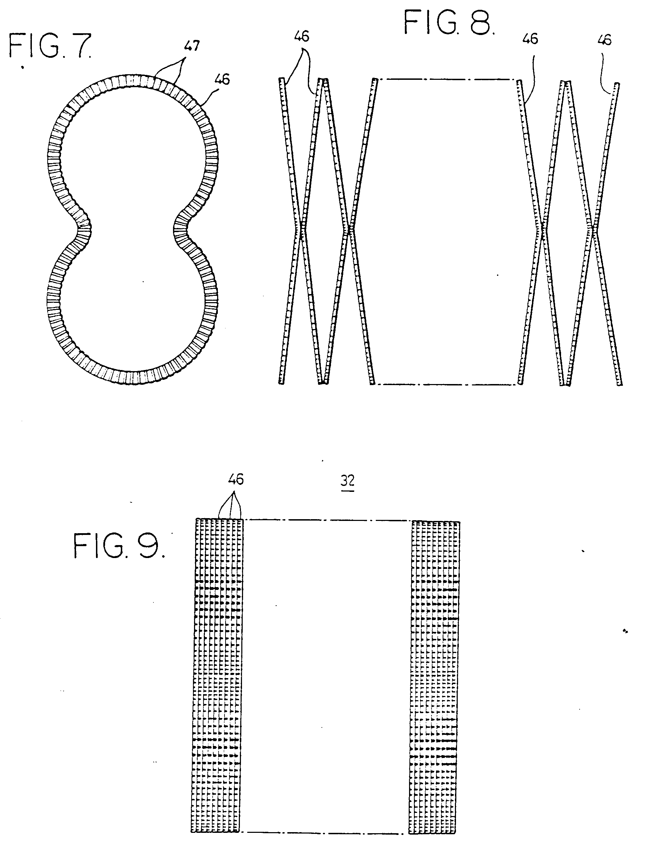

The extractor also includes a filter 32 constituted by a plurality of connected filter elements 46. The filter 32 is of annular construction with a cross-sectional shape of a figure 8 as seen in Figure 7. In side view the filter has the appearance shown in Figure 9 when compressed, i.e. when in its use configuration and when expanded or developed it has the appearance shown in Figure 8. The filter 32 is positioned around the two squeezing rollers 20, 22. A plurality of filter grooves 47 is formed in one side of each filtering element 46 extending radially, i.e. perpendicular to the length of the filter element. Each filter element 46 is elongate and is bent at its centre, with the bends in adjacent elements being in opposite senses as seen in Figure 8. Each adjacent pair of filter elements 46 is connected together, alternately at their ends and at their centres. The filter elements 46 are retained within a cage 48, when in use, and thus adopt the configuration shown in Figure 9 with the filter grooves between each adjacent pair of filter elements 46 constituting filter holes or passages. In order to wash the filter it is removed from the housing 14 and the cage 48 is then removed to permit the filter to expand under the resilience of the elements 46 to adopt the configuration shown in Figure 8 whereafter washing with water and the removal of retained vegetable or fruit particles is a simple process.

The residual dregs, i.e. the solid vegetable or fruit matter remaining after the juice has been extracted, is discharged through a discharge opening 50 arranged centrally in a discharge section 30 having a discharge pressure adjusting device 28. The discharge pressure adjusting device 28 includes a discharge valve 52 arranged in the discharge opening 50. The discharge opening 50 communicates with a discharge path 54 extending downwardly away from the opening 50. The internal surface of the discharge path 54 acts as a valve seat in contact with the discharge valve 52. A valve stem 56 connects the discharge valve 52 to an adjustment plug 60 in whose end surface directed towards the discharge 30 there is an annular internally threaded recess whose thread is in engagement with an external thread on a semi-annular boss provided on the front end surface of the discharge section 30. A spring 62 is mounted on the valve stem 56 and applies pressure to the discharge valve 52 to urge it towards the valve seat. Rotation of the plug 60 will thus vary the contact pressure of the valve 52 against the valve seat 54. The dregs are discharged when the force exerted by them on the valve member 52 due to the action of the screw threaded portions 18 exceeds the force exerted on the valve member 52 by the spring 62, whereby the discharge pressure of the dregs may be simply manually adjusted as desired.

## Claims

1. A juice extractor for extracting juice from fruit or vegetable material including a housing (24) whose interior communicates with a supply hopper (24) for material from which juice is to be extracted and contains two rotatably mounted squeezing rollers (20, 22) which include cooperating helical gears (16) and a respective screw (18) at their leading end, a filter (32) surrounding at least the leading end portions of the squeezing rollers (20, 22), a dregs discharge section (30) being provided at the leading end of the housing (24) in which a discharge opening (50) is provided, a valve member (52) cooperating with the discharge opening (50) and being urged towards the closed position, characterised in that in a portion (38) of each helical gear (16) remote from the screw (18) there is a recess (40, 42) in each flank of each gear tooth extending along the length of the gear tooth.

2. A juice extractor as claimed in Claim 1 characterised in that a discharge pressure adjusting device (28) is arranged to vary the force with which the valve member (52) is urged towards the closed position.

3. A juice extractor as claimed in Claim 2 characterised in that the discharge pressure adjusting device (28) includes a spring (62) of which one end acts on the valve member (52) and the other end acts on an adjusting member (60) which is screw threadedly connected to the leading end of the housing (24) and may be moved towards and away from the housing by rotating it.

4. A juice extractor, as claimed in any one of the preceding claims, characterised in that the pitch of the thread of the screw (18) at the leading end of each squeezing roller (22) progressively decreases in the leading direction.

5. A juice extractor, as claimed in any one of the preceding claims, characterised in that one of the helical gears (16) includes two spaced annular portions (34, 36) of synthetic resin material which engage the other helical gear (16), the remainder of the first helical gear being spaced from the corresponding portion of the other helical gear by a predetermined distance of e.g. 0.3 to 0.5 mm.

6. A juice extractor as claimed in any one of the preceding claims, characterised in that the filter (32) is of annular construction and comprises a plurality of interconnected elongate resilient filter elements (46), in one side of each of which a plurality of grooves or recesses (47) is formed, each filter element (46) being bent in the middle, the bends in adjacent filter elements (46) being in opposite senses.

## Patentansprüche

1. Saftpresse zum Entsaften von Fruchtfleisch oder Gemüse mit
einem Gehäuse (12), dessen Innenraum mit einem Fülltrichter (24) für zu entsaftendes Fruchtfleisch oder Gemüse verbunden ist und zwei drehbar montierte Preßwalzen (20, 22) enthält, die zusammenwirkende Schrägzahnräder (16) und an ihrem vorderen Ende jeweils eine Schraube (18) aufweisen;
einem mindestens die vorderen Endbereiche der Preßwalzen (20, 22) umschließenden Filter (32);
einem an dem vorderen Ende des Gehäuses (12) angeordneten Auslaßabschnitt (30) für Rückstände, in dem eine Auslaßöffnung (50) vorgesehen ist; und
einem mit der Auslaßöffnung (50) zusammenwirkenden und gegen die Schließposition verspannten Ventilelement (52),
**dadurch gekennzeichnet,**
daß in einem von der Schraube (18) entfernt liegenden Bereich (38) jedes Schrägzahnrades (16) in jeder Flanke jedes Zahnradzahnes eine sich über dessen Länge erstreckende Aussparung (40, 42) ausgebildet ist.

2. Saftpresse nach Anspruch 1, dadurch gekennzeichnet, daß eine Auslaßdruck-Einstellvorrichtung (28) vorgesehen ist, um die Kraft zu verändern, mit der das Ventilelement (52) gegen die Schließposition verspannt ist.

3. Saftpresse nach Anspruch 2, dadurch gekennzeichnet, daß die Auslaßdruck-Einstellvorrichtung (28) eine Feder (62) aufweist, deren eines Ende auf das Ventilelement (52) und deren anderes Ende auf ein Einstellelement (60) einwirkt, das mit dem vorderen Ende des Gehäuses (12) in Gewindeeingriff steht und durch Drehen relativ zum Gehäuse hin und her bewegt werden kann.

4. Saftpresse nach einem der vorherigen Ansprüche, dadurch gekennzeichnet, daß die Gewindesteigung der Schraube (18) am vorderen Ende jeder Preßwalze (22) in Richtung nach vorne progressiv abnimmt.

5. Saftpresse nach einem der vorherigen Ansprüche, dadurch gekennzeichnet, daß eines der Schrägzahnräder (16) zwei beabstandetete ringförmige Teile (34, 36) aus Kunstharz aufweist, die in das andere Stirnrad (16) eingreifen, wobei der Rest des ersten Schrägzahnrades zu dem entsprechenden Teil des anderen Schrägzahnrades in einem vorbestimmten Abstand von zum Beispiel 0,3 - 0,5 mm liegt.

6. Saftpresse nach einem der vorherigen Ansprüche, dadurch gekennzeichnet, daß der Filter (32) ringförmig ausgebildet ist und eine Vielzahl von untereinander verbundenen langgestreckten federnden Filterelementen (46) aufweist, wobei eine Seite eines jeden Filterelements mit einer Mehrzahl von Nuten oder Aussparungen (47) ausgebildet ist, jedes Filterelement (46) in der Mitte abgebogen ist und die Biegungen in angrenzenden Filterelementen (46) entgegengesetzt gerichtet sind.

## Revendications

1. Presse-fruits destiné à extraire du jus de la matière de fruits ou de légumes, comprenant un logement (24) dont l'intérieur communique avec une trémie d'alimentation (24) en la matière dont il faut extraire le jus et contient deux rouleaux d'écrasement (20, 22) montés rotatifs et comportant des dentures hélicoïdales (16) qui coopèrent, ainsi qu'une vis respective (18) placée à leur extrémité de tête, un filtre (32) entourant au moins la partie d'extrémité de tête des rouleaux d'écrasement (20, 22), une section de décharge de la lie (30), dans laquelle une ouverture de décharge (50) est réalisée, étant aménagée à l'extrémité de tête du logement (24), un élément de soupape (52) coopérant avec l'ouverture de décharge (50) et étant repoussé vers la position de fermeture, caractérisé en ce qu'un évidement (40, 42) orienté sur la longueur de chaque dent de la denture est réalisé dans chaque flanc de chaque dent de la denture dans une partie (38) de chaque denture hélicoïdale (16) qui est distante de la vis (18).

2. Presse-fruits selon la revendication 1, caractérisé en ce qu'un dispositif (28) de réglage de la pression de décharge est réalisé de manière à permettre de faire varier la force avec laquelle l'élément de soupape (52) est repoussé vers la position de fermeture.

3. Presse-fruits selon la revendication 2, caractérisé en ce que le dispositif (28) de réglage de la pression de décharge comprend un ressort (62) dont une extrémité agit sur l'élément de soupape (52) et l'autre extrémité agit sur un élément de réglage (60) qui est relié par des filets de vis à l'extrémité de tête du logement (24) et qu'il est possible de rapprocher et d'éloigner du logement en le faisant tourner.

4. Presse-fruits selon l'une quelconque des revendications précédentes, caractérisé en ce que le pas des filets de la vis (18) située à l'extrémité de tête de chaque rouleau d'écrasement (22) diminue progressivement vers l'extrémité de tête.

5. Presse-fruits selon l'une quelconque des revendications précédentes, caractérisé en ce que l'une des roues à denture hélicoïdale (16) comprend deux parties annulaires espacées (36, 38) en matière résineuse synthétique qui sont en prise avec l'autre roue à denture hélicoïdale (16), le reste de la première roue à denture hélicoïdale étant placé par rapport à la partie correspondante de l'autre roue à denture hélicoïdale à une distance prédéterminée de par exemple 0,3 à 0,5 mm.

6. Presse-fruits selon l'une quelconque des revendications précédentes, caractérisé en ce que le filtre (32) est d'un mode d'exécution annulaire et comprend plusieurs éléments filtrants élastiques allongés et assemblés (46), dans un côté de chacun desquels sont réalisés plusieurs rainures ou évidements (47), chaque élément filtrant (46) étant incurvé au milieu, les incurvations des éléments filtrants voisins (46) étant de sens opposés.
